# EUROPEAN PATENT APPLICATION

(11) **EP 4 219 939 A1**
(43) Date of publication of application: **02.08.2023**
(21) Application number: 23382028.1
(22) Date of filing: 16.01.2023
(51) Int. Cl.: F03G 7/00, H02N 3/00

(54) **APPARATUS AND METHOD FOR GENERATING ELECTRIC ENERGY FROM THE EXTRACTION OF ELECTRONS IN THE LIQUID-VAPOUR PHASE CHANGE OF AN AQUEOUS SOLUTION**

(71) Applicant: Vilair, S.L.U., 08880 Cubelles (Barcelona) (ES)
(72) Inventor: FERRER FERRANDO, Carlos, 08880 CUBELLES (BARCELONA) (ES)
(74) Representative: Isern Patentes y Marcas S.L.

(57) **Abstract**

Apparatus and method for generating electric energy from the extraction of electrons in the liquid-vapour phase change of an aqueous solution, the apparatus comprising a container (1) in which the aqueous solution is received, which is sealed at the upper portion thereof by a lid (9), heating means (4) connected to the container and configured to heat the same, and a plurality of magnetic devices (7) arranged on an outer surface of the container, such that the top surface layer level of the aqueous solution is located at the height of the magnetic devices, wherein the magnetic devices are arranged in such a way that between two adjacent magnetic devices the poles of the same polarity of both adjacent magnetic devices face each other.

## Description

### Technical field

The present invention relates to an apparatus and a method for generating electric energy from the extraction of electrons during the phase change from liquid to gas of an aqueous solution and/or in the gaseous state of said aqueous solution, preferably water, either fresh water or salt water, or with dissolved materials.

### State of the art

The production of electric energy from the extraction of electrons is described in different documents of the state of the art. For example, CN114362593A describes an aqueous solution ion separation and collection device, which is a device for generating direct current electric energy in an electrolyte aqueous solution according to Ampere's law and the electromagnetic induction law, and the direct current electric energy separates the zwitterions in the electrolyte aqueous solution and collects the zwitterions in different containers for storage or instant use. When an external force drives the transmission disc to rotate, a conductor in a magnetic field generates a constant direct current induction potential difference according to the law of electromagnetic induction, and the potential difference separates the zwitterions in an electrolyte aqueous solution and promotes the zwitterions to move in opposite directions, so that the zwitterions in the electrolyte aqueous solution are separated and collected, electric energy is stored, and hydrogen and oxygen are generated during the discharge; when the conductor is metal enamelled wire, stable direct current electric energy is generated. According to the device, electric energy and mechanical energy are directly converted without the processes of reversing, filtering or similar, the mechanical and electric energy are completely synchronous, and the performance is constant and stable.

US8481965B1 describes a process that facilitates the production of electric energy through the deliberate extraction of electrons from atoms and molecules of a gas, vapour, liquid, particulate solid, or any other form of matter that can be passed along the surface or through the electron extraction unit. The extracted electrons are captured, collected, and controlled or adjusted for distribution as electric energy. It is an energy efficient process for the extraction and capture of electrons for the production of electric energy with positive atomic or molecular ions as by-products. The product ions can then be confined in a coherent beam or restricted to a magnetic enclosure or by other confinement methods, expelled to the atmosphere, another environment, or to ground, or modified into useful molecules. These results are accomplished by means of the forcible extraction and capture of electrons from the object particles by electrically charged particles in a strong electric field. It is an extremely efficient process, in that once the primary components are sufficiently charged, thereafter it requires only an occasional replenishment of energy to sustain the operation.

Document CN1526655A describes a liquid ion separating method characterised in that inside the ion separating chamber with solution flowing from top to bottom, two insulated metal plates with positive and negative charges are placed separately on two sides and at least two liquid outlets are placed separately below the pole plates. The ion separating method and apparatus of the present invention can be widely used in various fields, such as desalination of seawater with high efficiency and at low costs, separation of salts from seawater, removal of toxic soluble inorganic salts from industrial effluents, and the decomposition of copper sulphate, etc. in the chemical and medical industries.

Lastly, CN103090494A relates to electromagnetic devices, and discloses a negative-ion heating and humidifying device that is used for achieving the purposes of increasing the temperature, humidity and negative ion concentration of a place at the same time. The negative-ion heating and humidifying device comprises an electromagnetic heating unit, a radiator and a humidifier, wherein the humidifier is a vapour humidifier and comprises a box body, a vapour outlet and a water feeding port are formed in the upper portion of the box body, and a water inlet and outlet port is formed in one side of the box body and connected to a water inlet and outlet port of the radiator. The electromagnetic heating unit is fixed inside the box body and connected to a power supply, and the electromagnetic heating unit comprises two flexible magnets and a coil which is fixed between the two flexible magnets, wherein the two flexible magnets are embedded inside grooves in a support frame. The negative-ion heating and humidifying device has a simple and compact structure, is small in the occupied area, capable of effectively eliminating and controlling ozone, low in electric power consumption, high in heat efficiency and convenient to use, and can increase the temperature, humidity and negative ion concentration inside a room at the same time.

However, none of these documents describes a machine for generating electric energy from the extraction of electrons in the liquid-vapour phase change of an aqueous solution according to claim 1 of the present specification.

### Description of the invention

The object of the present invention is an apparatus and a method for generating electric energy configured to extract electrons in the liquid-vapour phase change of an aqueous solution and/or in the gaseous state of said aqueous solution or any other gas, and thus achieve a clean and economical source of electricity generation, since the invention preferably uses water as an aqueous solution, either fresh water, salt water, seawater, or water with dissolved materials, which is subjected to a heating step until reaching a temperature close to the boiling point thereof, thereby causing the liquid-vapour phase change.

This object is achieved with the apparatus and method of the attached claims. Practical embodiments of the invention are described in the dependent claims.

More specifically, in a first aspect of the invention, the apparatus for generating electric energy comprises a container provided with an outer surface and configured to receive and contain an aqueous solution, the container comprising an opening prepared to be hermetically sealed by a lid, and heating means connected to the container and configured to heat said container and bring the aqueous solution to the liquid-vapour phase change temperature, maintaining said temperature, or any other required temperature, such as that required to maintain a substance in the gas phase, stable.

This apparatus is characterised in that it comprises: a plurality of magnetic devices coupled around the outer surface of the container, separated from each other, said magnetic devices being equipped with opposite magnetic poles, wherein the magnetic devices are arranged in such a way that between two adjacent magnetic devices, the poles of the same polarity of both adjacent magnetic devices face each other, and wherein the magnetic poles are configured to excite and attract free electrons present in the liquid-vapour phase change of the aqueous solution, and wherein a surface layer of said aqueous solution is located at the same level as the plurality of magnetic devices; a grid of conductive material couplable to the container, said grid being provided with coupling ends, wherein each coupling end is couplable to the container in the separation between two adjacent magnetic devices; and a mesh of conductive material arranged in contact with the grid, configured to capture the electrons that are excited and attracted by the magnetic poles and lead them to the grid, generating a current in said grid.

In one particular embodiment, the apparatus comprises an energy accumulator in operative connection with the grid so that the electrons transported in the grid are directed to and stored in the energy accumulator.

In another particular embodiment, the apparatus comprises output connectors couplable at the coupling ends thereof to the outer surface of the container, wherein the output connectors are configured as electrical connections that are connectable to an energy accumulator.

In another particular embodiment, the magnetic devices are magnets, electromagnets, or a combination of magnets and electromagnets.

In another particular embodiment, the container comprises a complementary inlet to enable the inflow of aqueous solution, and the lid comprises a gas outlet, such that the inflow of aqueous solution and the outflow of vapour of the aqueous solution are adjustable, for example by controllable valves, and are configured to maintain a constant level of aqueous solution in the container.

In another particular embodiment, the aqueous solution is selected from fresh water, salt water, seawater, water with dissolved elements, or a combination thereof.

In a second aspect of the invention, the method for generating electric energy from the extraction of electrons in the liquid-vapour phase change and/or in the gaseous phase of an aqueous solution, able to be carried out in an apparatus, such as the one described above, comprises the steps of:
depositing the aqueous solution in the container until the top surface layer of said aqueous solution is at the same level as the magnetic devices and hermetically sealing the container with the lid;
heating the container with the heating means until the aqueous solution reaches the liquid-vapour phase;
extracting the electrons from the aqueous solution in the liquid-vapour phase change of said aqueous solution, exciting them by means of the magnetic devices, capturing them by means of the mesh and transmitting them to the grid;
in such a way that the electric current generated by the flow of captured electrons is directed through the grid and stored in the energy accumulator.

In one particular embodiment of the method of the invention, the temperature to which the aqueous solution is heated and maintained to bring it to the liquid-vapour phase is approximately 98 °C at 1 atmosphere of pressure.

In essence, the present invention has the particular feature in that it takes advantage of the fact that, in the liquid-gas phase change and/or in the gaseous phase of an aqueous solution (i.e., in the process of water evaporation, or in water vapour), electrons are released which, according to a first aspect of the invention, are collected by a mesh with a conductive surface arranged on the surface of the aqueous solution in a closed container and subjected to a temperature close to the saturation point of the aqueous solution (saturated liquid). The mesh is connected to a plurality of conductors that allow the electric current generated in the phase change (i.e., the electrons in motion) to be connected to an external storage or accumulation device. In a practical embodiment of the invention, the apparatus comprises a plurality of magnets or electromagnets situated around the container and close to the plurality of connections of the mesh to the container, the poles of the same polarity of said magnets or electromagnets facing each other.

Throughout the description and in the claims, the word "comprises" and the variants thereof are not intended to exclude other technical characteristics, components or steps. For those skilled in the art, other objects, advantages and features of the invention may be deduced from both the invention and the practical use of the invention. The following examples and drawings are provided by way of illustration and are not intended to limit the present invention. Furthermore, the invention covers all possible combinations of particular and preferred embodiments included herein.

### Brief description of the drawings

What follows is a very brief description of a series of drawings that aid in better understanding the invention, and which are expressly related to an embodiment of said invention that is illustrated by way of a non-limiting example of the same.
FIG. 1. Shows an exploded diagram of the apparatus for generating electric energy of the invention.
FIG. 2. Shows a schematic upper view of the apparatus of the invention.

### Preferred embodiment of the invention

The attached figures show an example of a practical embodiment of the invention that comprises a circular container 1 that has an inlet for aqueous solution 5 at the base thereof, the container preferably being made of insulating material and, in a particular non-limiting practical embodiment, having a diameter of 600 mm. The container 1 is filled with an aqueous solution which, in the preferred embodiment is, water -fresh water, salt water, seawater or water with additives- up to a specific level 1.1 which, in a non-limiting practical embodiment, is 100 mm measured from the bottom of the container 1.

Around the container 1, in a position coinciding with the water level 1.1, a plurality of magnetic devices 7 are situated, for example, magnets 7, -which in another particular embodiment can be electromagnets- separated from each other -in a particular non-limiting embodiment, the separation is 10 mm-. The magnets 7 each have a length of 100 mm. The magnets 7 are arranged around the container 1 in such a way that the poles with the same polarity face each other. In other words, between two consecutive magnets 7, the positive poles will face each other, just like the negative poles, but the positive and negative poles of two consecutive magnets 7 will never face each other.

In the separation between two consecutive magnets 7, the coupling ends 6.1 of a grid 6 are fixed, whereby the grid is coupled to the container 1, wherein said grid 6 is arranged above the top surface layer of the water, that is to say, above the level 1.1, whereby the water level is adjusted to be below at approximately the same height as the grid. Each coupling end 6.1 is couplable to the container 1 in the separation between two adjacent magnetic devices 7, each coupling end 6.1 being connected to an output connector 3 which is connectable to an external accumulator. Each output or connector 3 will be positive or negative depending on the polarity of the magnets 7 between which a particular coupling end 6.1 is placed.

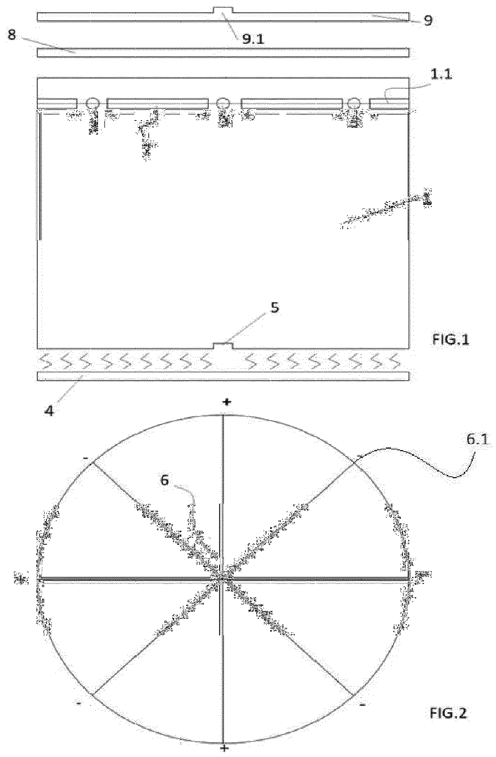

In an alternative embodiment, the grid 6 is made up of a plurality of conductive elements that cross the container 1 from one side to the other, in such a way that the assembly of conductive elements forms a star, as best seen in figure 2.

Above or below the grid 6, a conductive and dense mesh 8 is placed, which is in contact with the grid 6 and configured to capture the electrons that are excited and attracted by the magnetic poles, and lead them to the grid 6, generating a current in said grid 6. On this conductive-mesh assembly, a hermetic and flat cover 9 will be arranged, with a vapour outlet 9.1 for the vapour of the aqueous solution, in this case of water.

The vapour outlet 9.1 and the aqueous solution inlet 5 are adjustable to maintain a constant level 1.1 of aqueous solution in the heating and evaporation process of the same contained in the container 1.

In order to extract the electrons, the water must be brought to the evaporation point by heating the container 1 using the heating means 4 until the temperature is approximately 98 °C with 1 atmosphere of pressure. In the liquid-vapour and/or gas phase change, the electrons attracted by the magnets 7 are released through the assembly formed by the grid 6 and the mesh 8, in such a way that an electric current is generated between the positive and negative connectors 3, wherein this current can be stored in an external accumulator prepared for this purpose.

## Claims

1. An apparatus for generating electric energy comprising:
a container (1) provided with an outer surface and configured to receive and contain an aqueous solution, the container (1) comprising an opening prepared to be hermetically sealed by a lid (9), and
heating means (4) connected to the container (1) and configured to heat said container (1) and bring the aqueous solution to the liquid-vapour phase change temperature;
**characterised in that** it comprises:
a plurality of magnetic devices (7) coupled around the outer surface of the container (1) with a separation from each other, said magnetic devices (7) being equipped with opposite magnetic poles, wherein the magnetic devices (7) are arranged in such a way that between two adjacent magnetic devices (7), the poles of the same polarity of both adjacent magnetic devices (7) face each other, and wherein the magnetic poles are configured to excite and attract free electrons present in the liquid-vapour phase change and/or in the gas of the aqueous solution, and wherein a top surface layer of the aqueous solution is located at the same level as the plurality of magnetic devices (7);
a grid (6) of conductive material couplable to the container (1), said grid (6) being provided with coupling ends (6.1), wherein each coupling end (6.1) is couplable to the container (1) in the separation between two adjacent magnetic devices (7); and
a mesh (8) of conductive material arranged in contact with the grid (6) configured to capture the electrons that are excited and attracted by the magnetic poles and lead them to the grid (6), generating a current in said grid (6).

2. The apparatus according to claim 1 comprising an energy accumulator in operative connection with the grid (6) so that the electrons transported in the grid (6) are directed and stored in the energy accumulator.

3. The apparatus according to any of the preceding claims, comprising output connectors (3) couplable to the coupling ends (6.1) on the outer surface of the container (1), wherein the output connectors (3) are configured as electrical connections that are connectable to an energy accumulator.

4. The apparatus according to any of the preceding claims, wherein the magnetic devices (7) are magnets, electromagnets or a combination of magnets and electromagnets.

5. The apparatus according to any of the preceding claims, wherein the container (1) comprises a complementary inlet (5) for aqueous solution, and the lid (9) comprises a vapour outlet (9.1) for aqueous solution, in such a way that the complementary inlet (5) and the vapour outlet (9.1) are adjustable and are configured to maintain a constant level of aqueous solution in the container 1.

6. The apparatus according to any of the preceding claims, wherein the aqueous solution is selected from fresh water, salt water, seawater, water with dissolved elements or a combination thereof.

7. A method for generating electric energy from the extraction of electrons in the liquid-vapour phase change and/or in the gas phase of an aqueous solution able to be carried out in an apparatus according to claims 1 to 6, comprising the steps of:
depositing the aqueous solution in the container (1) until the top surface layer of said aqueous solution is at the same level as the magnetic devices (7) and hermetically sealing the container with the lid (9);
heating the container (1) with the heating means (4) until the aqueous solution reaches the liquid-vapour phase;
extracting the electrons from the aqueous solution in the liquid-vapour phase change of said aqueous solution, exciting them by means of the magnetic devices (7), capturing them by means of the mesh (8) and transmitting them to the grid (6);
in such a way that the electric current generated by the flow of captured electrons is directed through the grid (6) and stored in the energy accumulator.

8. The method according to claim 7, wherein the temperature to which the aqueous solution is heated to bring the same to the liquid-vapour phase is approximately 98 °C at 1 atmosphere of pressure.
